Europäisches Patentamt

**European Patent Office**

**Office européen des brevets**

(11) Veröffentlichungsnummer: **0 088 882**
**B1**

(12) **EUROPÄISCHE PATENTSCHRIFT**

(45) Veröffentlichungstag der Patentschrift:
**15.10.86**

(51) Int. Cl.⁴: **B 01 D 33/04,** B 01 D 29/02

(21) Anmeldenummer: **83101173.9**

(22) Anmeldetag: **08.02.83**

(54) **Druck-Band-Filter, insbesondere zur Entwässerung von Feinkohle.**

(30) Priorität: **11.03.82 DE 3208735**
**25.01.83 DE 3302326**

(43) Veröffentlichungstag der Anmeldung:
**21.09.83 Patentblatt 83/38**

(45) Bekanntmachung des Hinweises auf die Patenterteilung:
**15.10.86 Patentblatt 86/42**

(84) Benannte Vertragsstaaten:
**AT BE DE FR GB SE**

(56) Entgegenhaltungen:
**DE-A-1 536 821**
**FR-A-2 239 270**
**FR-A-2 249 321**
**US-A-3 399 778**
**US-A-3 722 682**
**US-A-4 033 873**

(73) Patentinhaber: **Klöckner- Humboldt- Deutz Aktiengesellschaft, Deutz- Mülheimer- Strasse 111 Postfach 80 05 09, D-5000 Köln 80 (DE)**

(72) Erfinder: **Heintges, Siegfried, Im Mühlbachtal 7, D-4358 Haltern (DE)**
Erfinder: **Strauss, Werner, Voltastrasse 19, D-4630 Bochum 1 (DE)**
Erfinder: **Schulze Horn, Hannes, Dr., Im Defdahl 51, D-4600 Dortmund 1 (DE)**

(74) Vertreter: **Beisner, Klaus, Dipl.- Ing., c/o KHD Humboldt Wedag AG Patente und Lizenzen Wiersbergstrasse Postfach 91 04 57, D-5000 Köln 91 (DE)**

LIBER, STOCKHOLM 1986

## Beschreibung

Die Erfindung betrifft ein Druckbandfilter, bestehend aus einem waagerecht angeordneten, zylindrischen Druckbehälter mit Einrichtungen zur Trübe zufuhr und Filtratabfuhr, wobei der Innenrau des Druckbehälters durch ein endloses, auf einer filtratdurchlässigen Abstützung anliegendes Filterelement in eine Trübekammer und eine Filtratkammer abgeteilt wird und das über die Stirnseiten des Druckbehälters ein- und austretende Filterelement diskontinuierlich in axialer Richtung durch den Druckbehälter beweglich ist, und Verschlußgliedern zum Abdichten des Druckbehälters an den Stirnseiten. Ein solches Filter ist aus der US-A-3,399,778 bekannt.

Druckbandfilter sind seit längerem bekannt. Bei den bekannten pneumatischen Druckbandfiltern sind die Filtratkammer und die Trübekammer in der Regel in einem jochartigen Rahmen angeordnet, und mindestens eine der beiden Kammern ist über mechanische oder hydraulische Verstellglieder gegen Dichtflächen der jeweiligen anderen Kammer anpreßbar. Dieser Aufbau einer Filtervorrichtung ist relativ aufwendig.

Eine vereinfachte Lösung ist aus der DE-A 20 62 345 bekannt, bei der Filtratkammer und Trübekammer aufkippbar über eine Achse miteinander verbunden sind, die als Schwenkachse dient. Auch diese Vorrichtung ist noch relativ aufwendig und erfordert insbesondere bei hohen Drücken große Wandstärken, Versteifungsrippen etc., die zu einem sehr schweren Gesamtaufbau führen.

Auch einteilig ausgebildete eckige Druckbehälter (DE-A 15 36 821, US-A 3,722,682) erfordern wegen der punkt- beziehungsweise linienförmigen Krafteinleitung profilartige Seitenwände und sind insgesamt sehr schwer.

Bei einem zylindrischen Druckbehälter, wie bei einem Filter gemäß US-A 3,399,778, läßt sich zwar die Wanddicke vermindern, erkauft wird dieser Vorteil aber durch ein radialsymmetrisches Stützgerüst, an dem ein schlauchförmiges Filterelement anliegen muß.

Der Erfindung liegt die Aufgabe zugrunde, ein Druckbandfilter anzugeben, das besonders einfach und leicht ausgebildet ist. Es soll trotzdem mit hohen Drücken betrieben werden können.

Die Aufgabe wird dadurch gelöst, daß das Filterelement ein Filterband ist, das auf einer ebenen Abstützung anliegt, und daß die Austrittsöffnungen für das Filterband an den Stirnseite rechteckig ausgebildet sind.

Durch eine rohrförmige Ausbildung ist der Druckbehälter bezüglich der Spannungsverteilung besonders günstig ausgebildet, so daß er die geringstmögliche Wandstärke aufweisen kann. Außerdem ist die Herstellung des Druckbehälters besonders einfach. Durch rechteckige Austrittsöffnungen für das Filterband werden die Austrittsöffnungen vorteilhaft klein gehalten, so ergeben sich auch kleine Verschlußkräfte während des Filtervorganges. Insgesamt ergibt sich eine für ein pneumatisches Druckbandfilter bisher unerreichte leichte und einfache Ausführung.

In Ausgestaltung der Erfindung ist vorgesehen, daß der Durchmesser des zylindrischen Druckbehälters zwischen 50 und 150 cm, insbesondere zwischen 80 und 120 cm, beträgt. Der Bereich zwischen 50 und 150 cm ist für die angestrebten Arbeitsdrücke von 2-6 bar bezüglich des Gewichts je cm$^2$ Filterfläche besonders günstig, wobei der Bereich zwischen 80 und 120 cm eine Optimierung bezüglich des Drucks, des Gesamtgewichts der Vorrichtung und der Filterfläche ergibt. Für eine Bauausführung ist speziell der Durchmesser 1 m und ein Arbeitsdruck von 4 bar vorgesehen. Die Druckluft kann also den normalen Druckluftnetzen entnommen werden.

In weiterer Ausgestaltung der Erfindung ist vorgesehen, daß das Filterband als gelochtes Blechband ausgebildet ist. Bei den bekannten Filterbändern aus Gewebe - sei es Kunststoff oder sei es Metallgewebe - ist ein sehr starker Schließdruck notwendig, um die zwischen den einzelnen Fäden vorhandenen freien Querschnitte zu verschließen.

Bei einem gelochten Metallband ist dagegen vorteilhaft zwischen den einzelnen Löchern ein Sperrquerschnitt vorhanden. Die aufzuwendende Schließkraft kann daher erheblich verringert werden.

In weiterer Ausgestaltung der Erfindung ist vorgesehen, daß das Blechband Zonen ohne Filtratdurchtrittsöffnungen aufweist, deren Abstand dem Abstand der Dichtflächen der Abdichtvorrichtungen entspricht. So ist es vorteilhaft möglich, das Band auf einer völlig glatten Metalloberfläche abzudichten. Dies führt zu einer gut beherrschbaren, problemlosen Abdichtung. Des weiteren ist eine leichte und gute Reinigung des Abdichtbereiches möglich. Einzige Voraussetzung ist, daß die Bandlänge einem Mehrfachen des Abstandes der Abdichtvorrichtungen entspricht. Dies ist eine einfache konstruktive Maßnahme.

In weiterer Ausgestaltung der Erfindung ist vorgesehen, daß in der Filtratkammer die Abstützung von einer an der Druckbehälterinnenwand anliegenden Ausfüllung gestützt wird, wobei die Ausfüllung Filtratleit- und -sammelvorrichtungen aufweist. So ergibt sich ein besonders günstiges Abstützen des Filterbandes mit einer gleichmäßigen Verteilung der auftretenden Kräfte auf den Druckbehälter. Eine Brückenkonstruktion zum Abfangen der auftretenden Kräfte, die bei höheren Drücken aufwendig ist, entfällt.

Es ist weiterhin vorgesehen, daß die auf der Oberseite der Ausfüllung angeordnete Abstützung ein Spaltsieb ist. So ergibt sich eine großflächige Auflage des Filterbandes mit ungehindertem Durchtritt des Filtrats in die Filtratleit- und -sammelvorrichtungen.

In weiterer Ausgestaltung der Erfindung ist vorgesehen, daß die Abdichtvorrichtungen kissenartig ausgebildet sind und insbesondere aus Weichgummi mit einem Stahlträger bestehen. Durch eine kissenartige Ausbildung der Abdichtvorrichtungen ergibt sich vorteilhaft, daß die Dichtflächen auch beim Vorliegen von Oberflächenunebenheiten ihre Funktion nicht verlieren. Der Weichgummi paßt sich den Unebenheiten an. Auch nicht vollständig entfernte Körner o.ä., stören nicht, da durch die Kissenform noch genügend Abdichtfläche für eine einwandfreie Abdichtung zur Verfügung steht. Der Stahlträger sorgt dabei für die notwendige Stabilität der Dichtkissen.

In weiterer Ausgestaltung der Erfindung ist vorgesehen, daß die Abdichtvorrichtungen eine Innenlippe aufweisen. Eine Innenlippe verstärkt vorteilhaft automatisch die Abdichtwirkung mit steigendem Druck, so daß insgesamt die Abdichtvorrichtungen leichter ausgeführt werden können. Die Lippe weist dabei vorteilhaft eine relativ geringe Breite auf, so daß sie leicht aus dem Filterkuchen herausgezogen oder herausgeschwenkt werden kann.

In weiterer Ausgestaltung der Erfindung ist vorgesehen, daß das Filterband zwei Transport- und Umlenkrollen aufweist, die durch innenliegende Motoren, insbesondere Bremsmotoren, angetrieben werden. So ergibt sich eine besonders kompakte Ausführung des Bandantriebs, die bei der Verwendung von Bremsmotoren auch für eine exakte Positionierung des Filterbandes in Bezug auf die Abdichtzonen sorgen kann.

In weiterer Ausgestaltung der Erfindung ist dabei vorgesehen, daß die Transport- und Umlenkrollen beweglich, insbesondere heb- und senkbar ausgebildet sind. Durch eine bewegliche, insbesondere heb- und senkbare Ausbildung der Umlenkrollen ist es möglich, das Filterband nach Beendigung des Filtervorganges anzuheben, so daß die Reibung zwischen dem Filterband und seiner Auflage erheblich verringert beziehungsweise vollständig beseitigt wird. So wird die Lebensdauer des Filterbandes erheblich erhöht. Das Heben und Senken des Filterbandes kann dabei durch gesonderte Hubelemente, aber auch durch die Ausnutzung des Drehmomentes beim Anfahren des Bandtransportes erreicht werden.

In weiterer Ausgestaltung der Erfindung ist vorgesehen, daß das Filterband als Stahlgewebeband mit durchgehenden Bandkanten ausgebildet ist. Durch durchgehende Bandkanten wird eine gute seitliche Führung und Abdichtung ermöglicht. So wird der Filtervorgang weiter verbessert.

In weiterer Ausgestaltung der Erfindung ist vorgesehen, daß auf das Filterband ein Vliesband aufgelegt ist. Durch ein aufgelegtes Vliesband kann eine weitere Verbesserung der Filtration erfolgen. Es wird insbesondere verwendet, wenn das erfindungsgemäße Filter nicht für die Filtration von Kohle, sondern zum Beispiel im Lebensmittelbereich eingesetzt wird. Das Vliesband wird dabei nicht endlos ausgeführt, sondern läuft von einer Vorratsrolle ab.

In weiterer Ausgestaltung der Erfindung ist vorgesehen, daß die Verschlußglieder Hebelbetätigungen aufweisen und daß die Bewegungsrichtung der Abdichtvorrichtungen gegenüber dem Filterband vorzugsweise zwischen 20 und 45°, insbesondere jedoch 30 - 40°, beträgt. Diese Bewegungsrichtung der Abdichtvorrichtungen erlaubt bei einer Hebelbetätigung eine besonders günstige Verteilung der Anpreßkraft zwischen dem Filterband und der freien Dichtfläche. So wird für eine einwandfreie Abdichtung beider Bereiche gesorgt.

In weiterer Ausgestaltung der Erfindung ist vorgesehen, daß die Filtratkammer durch ein Trennblech in einen Arbeitsraum und einen Stützraum geteilt ist und der mit Flüssigkeit gefüllte Stützraum zum Abfangen der auf den Filtratraum und die Abstützung wirkenden Kräfte dient.

Durch diese erfindungsgemäße Ausführung wird sehr vorteilhaft eine stabile Abstützung des Filterbandes und Spaltsiebes in besonders einfacher Weise erreicht, die jederzeit bei Reparatur- und Wartungsarbeiten durch einfaches Ablassen der Stützflüssigkeit schnell aufgehoben und wieder hergestellt werden kann. Auf diese Weise wird auch eine leichte Zugänglichkeit des Stützraumes gewährleistet. Insbesondere wird durch die Verwendung einer Flüssigkeit als Stützmedium eine gleichmäßige allseitige Druckverteilung auf die Innenwandungen des Druckbehälters erreicht.

Bei dieser Ausgestaltung der Erfindung ist der Stützraum durch ein Ausgleichs-Druckrohr, das eine Füllstandshöhenanzeige besitzt, mit der Druckluftzufuhrleitung für den Arbeitsraum verbunden. Dadurch, daß der Stützraum mit einem Entlüftungsventil und einem Ausgleichsrohr versehen ist, kann sehr vorteilhaft oberhalb und unterhalb des Trennbleches ein vorbestimmter gleichmäßiger Druck aufgebracht und aufrecht erhalten werden. Desweiteren ermöglicht die Füllstandshöhenanzeige im Druckausgleichsrohr eine einfache Kontrolle des Stützflüssigkeitsstandes unterhalb des Trennbleches.

In weiterer Ausgestaltung der Erfindung ist vorgesehen, daß das erfindungsgemäße Filter eine automatische Taktsteuerung aufweist. Hierdurch wird die Funktion des Filters unabhängig von einer manuellen Bedienung. Die optimale Arbeitsgeschwindigkeit kann ständig eingehalten werden.

Schließlich ist in Ausgestaltung der Erfindung vorgesehen, daß mehrere Einzel-Filter zu einer Filter-Einheit zusammengefaßt sind. Durch das Zusammenfassen von mehreren Einzel-Filtern zu einer Filter-Einheit ist es möglich, durch eine Anordnung übereinander die Aufstellungs-Grundfläche besser auszunutzen und - wenn zum Beispiel eine Batterie von mehr als 3 Filtern verwendet wird - einen kontinuierlichen Gesamt-Filter-Vorgang mit nur leichter Pulsation der Durchsatzmenge zu erreichen. So ergibt sich ein Arbeiten mit dem erfindungsgemäßen Filter, das bezüglich der Kontinuität des Ausbringens nur unerheblich von den bekannten Scheiben- oder Trommel-Druck-Filtern unterschieden ist.

Die Erfindung wird anhand von Zeichnungen näher erläutert, aus denen weitere vorteilhafte Einzelheiten entnehmbar sind.

Im einzelnen zeigen:

Fig. 1 ein geschlossenes Druck-Band-Filter im Längggschnitt mit fester Ausfüllung,

Fig. 2 ein längsgeschnittenes Druck-Band-Filter im Augenblick des Band-Transportes,

Fig. 3 einen Querschnitt von der Mitte des Druck-Band-Filters,

Fig. 4 Die Hebel-Anordnung und Dichtkissen-Ausführung in schematischer Darstellung,

Fig. 5 ein geschlossenes Druck-Band-Filter im Längsschnitt mit hydraulischem Stützraum und

Fig. 6 einen Querschnitt des Druck-Band-Filters an der Stelle der Druckluft, zufuhrleitung gemäß Fig. 5 nach Linie AB.

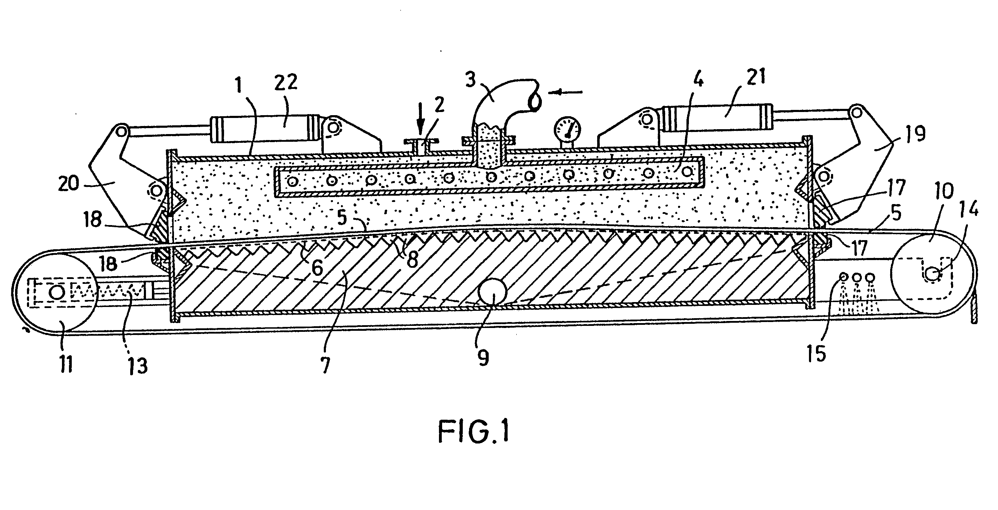

Fig. 1 zeigt das Druckbehälterrohr 1 mit dem Einlaßstutzen 2 für die Druckluft und den Zulaufstutzen 3 für die zu filternde Suspension, zum Beispiel Feinkohle, mit der angeschlossenen Verteil-Vorrichtung 4. In der Mitte des Druckbehälterrohres 1 befindet sich das Filterband 5, das auf einem als Abstützung dienenden Spaltsieb 6 aufliegt. Das Spaltsieb 6 stützt sich auf der Ausfüllung 7 ab, die schematisch angedeutete Filtrat-Leit- und Abführorgane 8 und 9 aufweist. Die Ausfüllung 7, die zur faltenfreien Auflage des Filterbandes nach oben gewölbt sein kann, besteht in dieser Ausführungsform aus druckfestem Kunststoff, kann aber ebenso auch aus Zement oder einem porösen keramischen Material bestehen.

Das Filterband 5 wird durch die Trommeln 10 und 11 geführt und bewegt, die vorzugsweise als Trommel-Motore ausgebildet sind und in ihrem Inneren eine Brems-Vorrichtung aufweisen. Die Trommeln 10 und 11 sind vorzugsweise mit Gummi zur Schonung des Filterbandes und zur besseren Übertragung des Drehmomentes belegt. Eine Andruck-Vorrichtung 13 und/oder eine Hebe-Vorrichtung 14 sorgen für die benötigte Bandspannung und ein zur Minderung des Verschleißes vorteilhaftes Anheben des Bandes während des Abwurf-Vorganges.

Auf der Unterseite des Druckbehälterrohres 1 ist noch eine Band-Reinigungs-Vorrichtung 15 angeordnet, die als Brause- und/oder Bürst-Vorrichtung ausgebildet ist. Die Dichtkissen 17 und 18 weisen Klemmhebel 19 und 20 auf, die von Hydraulik-Zylindern 21 und 22 betätigt werden. Die Dichtkissen 17 und 18 sind vorteilhaft zweiteilig ausgebildet und bestehen aus Weichgummi von zum Beispiel einer Shore-Härte von 50, um eine Abdichtung auch bei Band-Unebenheiten, kleineren Verschmutzungen etc. zu erreichen.

Die Hydraulik-Zylinder 21 und 22 werden ebenso wie die Trommel-Motore der Trommeln 10 und 11 und die Absperr-Organe für die Druckluft und die Suspension, die Reinigungs-Vorrichtungen etc. elektrisch gesteuert. Zu diesem Zweck weist das Filter eine nicht gezeigte Steuer-Einheit auf, die vorzugsweise aus elektronischen Bausteinen besteht und der Einfachheit halber als Folgesteuerung ausgebildet ist.

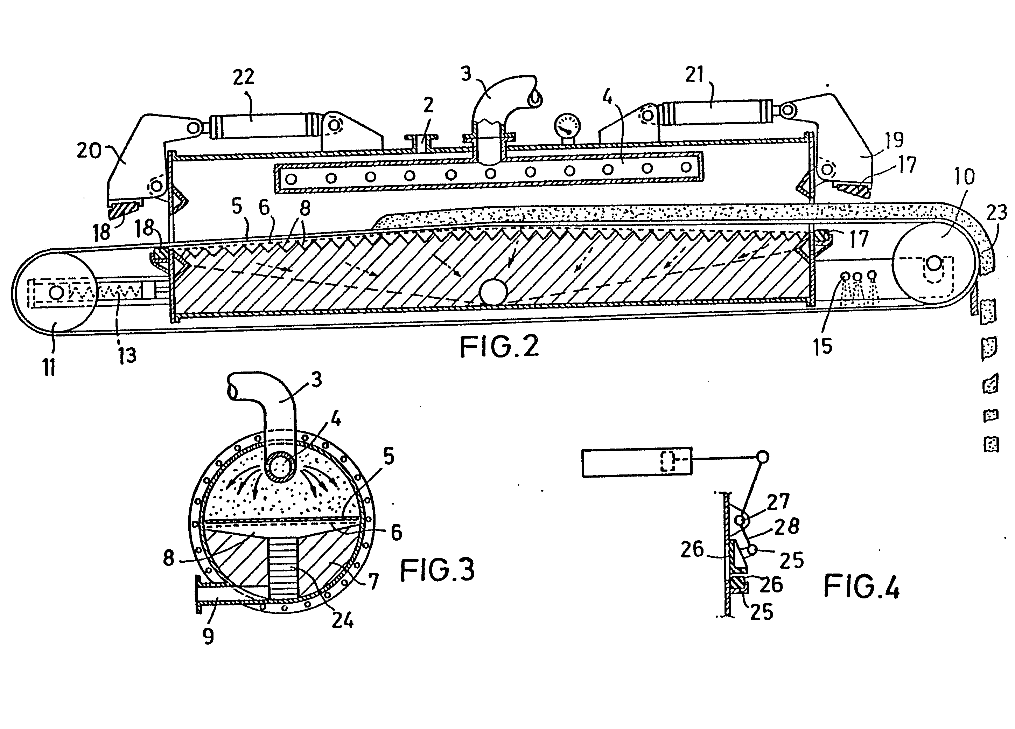

Im Entladezustand - entsprechend Fig. 2 - sind die Druckzylinder 21 und 22 eingefahren und die Dicht-Vorrichtungen 17, 18 geöffnet. Das Bandvorzugsweise ist die Trommel 10 angehoben - wirft den gebildeten Filterkuchen 23 über die Trommel 10 ab.

Aus Fig. 3 ist ersichtlich, daß die Ausfüllung 7 in ihrer Mitte einen Filtrat-Sammler 24 aufweist, der das Filtrat vom Spaltsieb über die eingeformten Kanäle 8 zur Filtrat-Ableitung 9 führt. Die Filtrat-Sammel- und Leit-Vorrichtungen sind durch diese Ausbildung vorteilhaft nach oben offen und einfach einformbar.

Im der schematischen Darstellung von Fig. 4 bezeichnet 25 den Stahlträger oder -kern bzw. die Stahlumhüllung der Dichtkissen 26, die aus einer ca. 20 - 50 mm dicken Weichgummischicht bestehen. Die Ausbildung und die Lage des Anlenkpunktes 27 des Gestänges 28 sind dabei derart gewählt, daß der Anpreßwinkel des oberen Gummikissens zwischen 25° und 45°, insbesondere jedoch ca. 35°, beträgt.

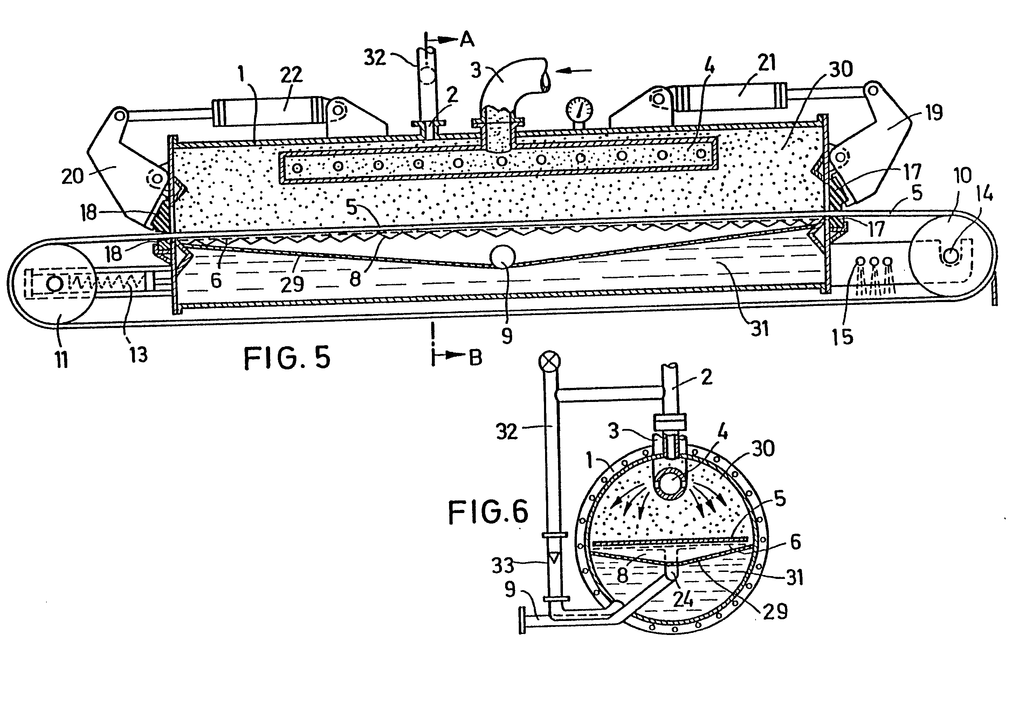

Fig. 5 zeigt eine besondere Bauausführung des Druckbehälterrohres 1. Diese wird durch ein Trennblech 29 in einen obenliegenden Arbeitsraum 30 und einen untenliegenden Stützraum 31 aufgeteilt. Das herausnehmbare Spaltsieb 6 stützt sich auf dem steifen Trennblech 29 ab, das so geformt ist, daß es Filtrat-Leit- und -Sammel-Rinnen 8 aufweist, die in ein Filtrat-Ableitungsrohr 9 münden.

In Fig. 6 wird deutlich, daß der flüssigkeitsgefüllte Stützraum 31 über ein Ausgleichs-Druckrohr 32, das eine Füllstandshöhenanzeige 33 für die Stützflüssigkeit besitzt, mit der Druckluftzufuhrleitung 2 verbunden ist, so daß beim Filtervorgang die Druckbeaufschlagung des Arbeitsraumes 30 und des darunterliegenden Stützraumes 31 immer gleichzeitig und mit gleichem Druck aus gemeinsamer Druckluftzufuhrleitung 2 erfolgt. So ermöglicht die gleichmäßige Verteilung der auftretenden Kräfte auch bei höheren Drücken eine besonders einfache und leichte Ausbildung des Druck-Band-Filters mit relativ dünnen Wandstärken.

Das erfindungsgemäße Druck-Band-Filter ist insbesondere für die Filtration von Feinkohle gedacht. Ohne den Rahmen der Erfindung zu verlassen, können jedoch auch andere Suspensionen, insbesondere Suspensionen mit sehr feinen Teilchen, gefiltert werden, wie sie zum Beispiel bei der Erz-Aufbereitung oder bei der Lebensmittel-Herstellung auftreten.

Auch eine Beaufschlagung mit Dampf statt mit Druckluft zur Verbesserung der Kapillar-Entwässerung ist möglich. Hierbei ist besonders günstig, daß mit überhitztem Dampf gearbeitet werden kann, der eine durchgreifende Erwärmung des Filterkuchens auf über 100 °C ohne das Verbleiben von Kondensat im Filterkuchen erlaubt.

**Patentansprüche**

1. Druckbandfilter bestehend aus einem waagerecht angeordneten, zylindrischen Druckbehälter (1) mit Einrichtungen zur Trübefzufuhr (3) und Filtratabfuhr (9), wobei der Innenraum des Druckbehälters (1) durch ein endloses, auf einer filtratdurchlässigen Abstützung (6) anliegendes Filterelement (5) in eine Trübekammer (30) und eine Filtratkammer abgeteilt wird und das über die Stirnseiten des Druckbehälters (1) ein- und austretende Filterelement (5) diskontinuierlich in axialer Richtung durch den Druckbehälter (1) beweglich ist, und Verschlußgliedern (17, 18, 19, 20) zum Abdichten des Druckbehälters (1) an den Stirnseiten, dadurch gekennzeichnet, daß das Filterelement ein Filterband (5) ist, das auf einer ebenen Abstützung (6) anliegt, und daß die Austrittsöffnungen für das Filterband (5) an den Stirnseiten rechteckig ausgebildet sind.

2. Filter nach Anspruch 1, dadurch gekennzeichnet, daß der Durchmesser des zylindrischen Druckbehälters (1) zwischen 50 und 150 cm, insbesondere zwischen 80 und 120 cm beträgt.

3. Filter nach Anspruch 1 oder 2, dadurch gekennzeichnet, daß das Filterband (5) als gelochtes Blechband ausgebildet ist.

4. Filter nach Anspruch 1, 2 oder 3 dadurch gekennzeichnet, daß das Filterband (5) Zonen ohne Filtratdurchtrittsöffnungen aufweist, deren Abstand dem Abstand der Dichtflächen der Abdichtvorrichtungen (17, 18) entspricht.

5. Filter nach Anspruch 1, 2, 3 oder 4, dadurch gekennzeichnet, daß in der Filtratkammer eine an der Druckbehälterinnenwand anliegende, Filtratlei- und -sammelvorrichtungen (8, 24) aufweisende Ausfüllung (7) vorgesehen ist, auf der sich die Abstützung (6) abstützt.

6. Filter nach Anspruch 5, dadurch gekennzeichnet, daß die auf der Oberseite der Ausfüllung (7) angeordnete Abstützung (6) ein Spaltsieb ist.

7. Filter nach einem der Ansprüche 1 bis 6, dadurch gekennzeichnet, daß die Abdichtvorrichtungen (17, 18) kissenartig ausgebildet sind und insbesondere aus Weichgummi (26) mit einem Stahlträger (25) bestehen.

8. Filter nach einem der Ansprüche 1 bis 7, dadurch gekennzeichnet, daß die Abdichtvorrichtungen (17, 18) eine Innenlippe aufweisen.

9. Filter nach einem der Ansprüche 1 bis 8, dadurch gekennzeichnet, daß das Filterband (5) zwei Transport- und Umlenkrollen (10, 11) aufweist, die durch innenliegende Motoren, insbesondere Bremsmotoren, angetrieben werden.

10. Filter nach Anspruch 9, dadurch gekennzeichnet, daß die Transport- und Umlenkrollen (10, 11) beweglich, insbesondere heb- und senkbar ausgebildet sind.

11. Filter nach Anspruch 1, 2, 5, 6, 7, 8, 9 oder 10, dadurch gekennzeichnet, daß das Filterband (5) als Stahlgewebeband mit durchgehenden Bandkanten ausgebildet ist.

12. Filter nach einem der Ansprüche 1 bis 11, dadurch gekennzeichnet, daß auf das Filterband (5) ein Vliesband aufgelegt ist.

13. Filter nach einem der Ansprüche 1 bis 12, dadurch gennzeichnet, daß die Verschlußglieder Hebelbetätigungen (19, 20, 28) aufweisen und daß die Bewegungsrichtung der Abdichtvorrichtungen (17, 18) gegenüber dem Filterband (5) vorzugsweise zwischen 20° und 45°, insbesondere jedoch 30° - 40°, beträgt.

14. Filter nach einem der Ansprüche 1 bis 4 oder 7 bis 13, dadurch gekennzeichnet, daß die Filtratkammer durch ein Trennblech (29) unter dem Filterband (5) und Abstützung (6) in einen Arbeitsraum (30) und einen Stützraum (31) abgeteilt ist, und daß der Stützraum (31) unter dem Trennblech (29) zur Druckübertragung von einer Flüssigkeit ausgefüllt ist.

15. Filter nach Anspruch 14, dadurch gekennzeichnet, daß der Stützraum (31) durch ein Ausgleichsdruckrohr (32), das eine Füllstandshöhenanzeige (33) besitzt, mit der Druckluftzufuhrleitung (2) für den Arbeitsraum (30) verbunden ist.

16. Filter nach einem der vorhergehenden Ansprüche, dadurch gekenzeichnet, daß es eine automatische Taktsteuerung aufweist.

17. Filter nach einem der vorhergehenden Ansprüche, dadurch gekennzeichnet, daß mehrere Einzelfilter zu einer Filter-Einheit zusammengefaßt sind.

18. Filter nach einem der vorhergehenden Ansprüche, dadurch gekennzeichnet, daß es zumindest am Ende des Filter-Vorganges mit Dampf beaufschlagbar ist.

**Claims**

1. A pressure band filter consisting of a horizontally mounted, cylindrical pressure vessel (1) with devices for the supply of pulp 83) and removal of filtrate (9), wherin the interior of the pressure vessel (1) is divided by an endless filter element (5), bearing against a support (6) which is permeable to filtrate into a pulp chamber (30) and a filtrate chamber and a filter element (5), entering and leaving via the ends of the pressure vessel (1), is movable discontinuously in the axial direction through the pressure vessel (1), and closing members (17, 18, 19, 20) to seal off the pressure vessel (1) at the ends, characterized in that the filter element is a filter band (5) which bears against a plane support (6) and that the outlets for the filter band (5) at the ends are made rectangular.

2. A filter as claimed in Claim 1, characterised in that the diameter of the cylindrical pressure vessel (1) is between 50 and 150 cm, particularly between 80 and 120 cm.

3. A filter as claimed in Claim 1 and 2, characterised in that the filter band (5) is constructed in the form of a perforated sheet-metal band.

4. A filter as claimed in Claim 1, 2 or 3, characterised in that the filter band (5) comprises zones without filtrate passages, the spacing of which corresponds to the spacing of the sealing surfaces of the sealing devices (17, 18).

5. A filter as claimed in Claim 1, 2, 3 or 4, characterised in that there is provided in the filtrate chamber a filling (7) which bears against the inner wall of the pressure vessel and comprises guiding and collecting devices (8, 24) for the filtrate and on which the support (6) is supported.

6. A filter as claimed in Claim 5, characterised in that the support (6) disposed at the top of the filling (7) is a slotted-hole screen.

7. A filter as claimed in any of Claims 1 to 6, characterised in that the sealing devices (17, 18) are of cushion-like construction and consist, in particular, of soft rubber (26) with a steel support (25).

8. A filter as claimed in any of Claims 1 to 7, characterised in that the sealing devices (17, 18) have an inside lip.

9. A filter as claimed in any of Claims 1 to 8, characterised in that the filter band (5) comprises two driving and guide rollers (10, 11) which are driven by internal motors, particularly brake motors.

10. A filter as claimed in Claim 9, characterised in that the driving and guide rollers (10, 11) are adapted for movement, particularly raising and lowering.

11. A filter as claimed in Claim 1, 2, 5, 6, 7, 8, 9 or 10, characterised in that the filter band (5) is constructed in the form of a steel mesh band with continuous band edges.

12. A filter as claimed in any of Claims 1 to 11, characterised in that a fleece band is laid on the filter band (5).

13. A filter as claimed in any of Claims 1 to 12, characterised in that the closing members comprise lever actuating means (19, 20, 28) and that the direction of movement of the sealing devices (17, 18) in relation to the filter band (5) is preferably between 20° and 45°, but particularly 30° - 40°.

14. A filter as claimed in any of Claims 1 to 4 or 7 to 13, characterised in that the filtrate chamber is divided, by a separating sheet of metal (29) below the filter band (5) and support (6), into a working compartment (30) and a supporting compartment (31) and that the supporting compartment (31) is filled with a liquid, below the separating sheet of metal (29) for the transmission of pressure.

15. A filter as claimed in Claim 14, characterised in that the supporting compartment (31) is connected to the compressed-air supply line (2) for the working compartment (30) by an equalizing pressure pipe (32) which has a level indicator (33).

16. A filter as claimed in any of the preceding Claims, characterised in that it has an automatic fixed-cycle control.

17. A filter as claimed in any of the preceding Claims characterised in that a plurality of individual filters are combined to form a filter unit.

18. A filter as claimed in any of the preceding Claims, characterised in that it can be acted upon by steam, at least at the end of the filter operation.

**Revendications**

1. Filtre à bande sous pression se composant d'un récipient sous pression (1) cylindrique, disposé horizontalement et pourvu de dispositifs pour l'introduction (3) de la matière à filtrer et l'évacuation (9) du filtrat, le volume intérieur du récipient sous pression (1) étant divisé par un élément de filtrage (5) sans fin, s'appliquant sur un appui (6) perméable au filtrat, en une chambre à produit à filtrer (30) et une chambre à filtrat et l'élément de filtrage (5), entrant et sortant par les côtés frontaux du récipient sous pression (1), est mobile de façon discontinue dans une direction axiale au travers du récipient sous pression (1), tandis qu'il est prévu des organes d'obturation (17, 18, 19, 20) pour la fermeture étanche du récipient sous pression (1) sur les côtés frontaux, caractérisé en ce que l'élément de filtrage est une bande de filtrage (5), qui s'applique contre un appui plan (6), et en ce que les orifices de sortie de la bande de filtrage (5) sur les côtés frontaux ont une forme rectangulaire.

2. Filtre selon la revendication 1, caractérisé en ce que le diamètre du récipient cylindrique sous pression (1) est compris entre 50 et 150 cm, notamment entre 80 et 120 cm.

3. Filtre selon la revendication 1 ou 2, caractérisé en ce que la bande de filtrage (5) est agencée sous forme d'une bande de tôle perforée.

4. Filtre selon la revendication 1, 2 ou 3, caractérisé en ce que la bande de filtrage (5) comporte des zones sans orifices de passage de filtrat, dont l'espacement correspond à l'espacement des surfaces d'étanchéité des dispositifs d'étanchéité (17, 18).

5. Filtre selon la revendication 1, 2, 3 ou 4, caractérisé en ce qu'il est prévu dans la chambre de filtrat un remplissage (7) comportant des dispositifs de canalisation et collecte de filtrat (8, 24) s'appliquant contre la paroi intérieure du récipient sous pression, et contre lequel s'applique l'appui (6).

6. Filtre selon la revendication 5, caractérisé en ce que l'appui (6) disposé sur le côté supérieur du remplissage (7) est un tamis à fentes.

7. Filtre selon une des revendications 1 à 6, caractérisé en ce que les dispositifs d'étanchéité (17, 18) sont agencés en forme de coussin et se composent notamment de caoutchouc mou (26) avec un support en acier (25).

8. Filtre selon une des revendications 1 à 7, caractérisé en ce que les dispositifs d'étanchéité comportent une lèvre intérieure.

9. Filtre selon une des revendications 1 à 8, caractérisé en ce que la bande de filtrage (5) comporte deux rouleaux de transport et de renvoi (10, 11), qui sont entraînés par des moteurs placés à l'intérieur, notamment des moteurs-freins.

10. Filtre selon la revendication 9, caractérisé en ce que les rouleaux de transport et de renvoi (10, 11) sont agencés de façon à être mobiles, notamment de façon à pouvoir monter et descendre.

11. Filtre selon la revendication 1, 2, 5, 6, 7, 8, 9 ou 10, caractérisé en ce que la bande de filtrage (5) est agencée comme une bande tissée en acier comportant des bords continus.

12. Filtre selon une des revendications 1 à 11, caractérisé en ce qu'une bande en forme de nappe est placée sur la bande de filtrage (5).

13. Filtre selon une des revendications 1 à 12, caractérisé en ce que les organes d'obturation comportent des systèmes d'actionnement à leviers (19, 20, 28) et en ce que la direction de mouvement des dispositifs d'étanchéité (17, 18) est inclinée par rapport à la bande de filtrage (5), de préférence d'un angle compris entre 20° et 45°, notamment cependant entre 30° et 40°.

14. Filtre selon une des revendications 1 à 4 ou 7 à 13, caractérisé en ce que la chambre à filtrat est divisée par une tôle séparatrice (29) en dessous de la bande de filtrage (5) et de l'appui (6) en un volume de travail (30) et un volume d'appui (31) et en ce que le le volume d'appui (31) est rempli, en dessous de la tôle séparatrice (29), d'un liquide pour une transmission pression.

15. Filtre selon la revendication 14, caractérisé en ce que le volume d'appui (31) est relié par un tube d'équilibrage de pression (32), qui comporte un indicateur de hauteur de remplissage (33), avec le conduit d'alimentation en air comprimé (2) pour le volume de travail (30).

16. Filtre selon une des revendications précédentes, caractérisé en ce qu'il comporte une commande de synchronisation automatique.

17. Filtre selon une des revendications précédentes, caractérisé en ce que plusieurs filtres individuels sont réunis sous forme d'une unité de filtrage.

18. Filtre selon une des revendications précédentes, caractérisé en ce qu'il peut être sollicité par de la vapeur au moins à la fin du processus de filtrage.

FIG.1

FIG.2

FIG.3

FIG.4

0 088 882

FIG. 5

FIG.6

0 088 882